# EUROPEAN PATENT APPLICATION

(11) **EP 4 672 170 A1**
(43) Date of publication of application: **31.12.2025**
(21) Application number: 25179479.8
(22) Date of filing: 28.05.2025
(51) Int. Cl.: G06V 10/26, G06V 10/62, G06V 10/82, G06V 20/58, G06V 40/20

(54) **VEHICLE CONTROL SYSTEM AND CONTROL METHOD FOR VEHICLE CONTROL SYSTEM**

(30) Priority: 26.06.2024 JP 2024102680
(71) Applicant: TOYOTA JIDOSHA KABUSHIKI KAISHA, Toyota-shi, Aichi-ken 471-8571 (JP)
(72) Inventor: YAMAZAKI, Masayuki, Toyota-shi, Aichi-ken,, 471-8571 (JP)
(74) Representative: Winter, Brandl - Partnerschaft mbB

(57) **Abstract**

A vehicle control system (1) includes: a vehicle-exterior camera (3) configured to photograph a getting-on area at the vicinity of an entrance (2a); a getting-on intention determination unit (20) determining whether there is a person that is performing a predetermined getting-on intention gesture to a vehicle (2), based on time-series data of a photographed image of the vehicle-exterior camera (3), at a time of execution of a closing control of a door (25); and a door control unit (21) stopping the closing control of the door (25) and open the door (25), when the getting-on intention determination unit (20) determines that there is the person that is performing the getting-on intention gesture.

## Description

### BACKGROUND OF THE INVENTION

### 1. Field of the Invention

The present disclosure relates to a vehicle control system and a control method for a vehicle control system.

### 2. Description of Related Art

Conventionally, as a technological literature relevant to a system that detects a getting-on intention of a person, there is Japanese Unexamined Patent Application Publication No. 2018-047993 (JP 2018-047993 A). This gazette shows an elevator user detection system that detects the change in the foot position of a person closest to a door based on time-series data of a photographed image of a camera and that detects whether there is a user having the getting-on intention, from the change in the foot position.

### SUMMARY OF THE INVENTION

Meanwhile, a technology of appropriately determining person's intention to get on a vehicle such as a bus and using the determination for the control of an entrance of the vehicle has been studied. However, in the case where the getting-on intention for not the elevator but the vehicle is determined, there can be a person that waits for the next bus or a person that has come to see someone off, and therefore, there is a problem in that it is difficult to perform the determination with sufficient accuracy in the case of focusing on only the change in the foot position of the person.

A first aspect of the present disclosure is a vehicle control system that controls opening and closing of a door of a vehicle at an entrance of the vehicle. The vehicle control system includes: a vehicle-exterior camera configured to photograph a getting-on area at the vicinity of the entrance; a getting-on intention determination unit determining whether there is a person that is performing a predetermined getting-on intention gesture to the vehicle, based on time-series data of a photographed image of the vehicle-exterior camera, at a time of execution of a closing control of the door; and a door control unit stopping the closing control of the door and open the door, when the getting-on intention determination unit determines that there is the person that is performing the getting-on intention gesture.

With the vehicle control system according to the first aspect of the present disclosure, when the determination that there is the person that is performing the predetermined getting-on intention gesture to the vehicle is made, the closing control of the door is stopped, and the door is opened. Therefore, it is possible to accurately determine the getting-on intention of the person compared to the case of focusing on only the position of the person, and to open the door during the closing control.

In the vehicle control system according to the first aspect of the present disclosure, the getting-on intention determination unit may determine, by using a machine learning model, whether there is the person that is performing the getting-on intention gesture. The machine learning model may be a machine learning model that outputs a determination result about whether there is the person that is performing the getting-on intention gesture, using the time-series data of the photographed image as an input. With this vehicle control system, it is possible to appropriately determine whether there is the person that is performing the getting-on intention gesture, using the machine learning model.

The vehicle control system according to the first aspect of the present disclosure may further include a feature amount calculation unit segmenting the photographed image into a plurality of blocks and calculate a motion vector for each of the plurality of blocks based on the time-series data of the photographed image. The feature amount calculation unit may calculate the magnitude of an entrance-directional component of the motion vector for each of the plurality of blocks. The getting-on intention determination unit may determine, by using the magnitude of the entrance-directional component of the motion vector for each of the plurality of blocks, whether there is the person that is performing the getting-on intention gesture. With this vehicle control system, since the person having the getting-on intention is likely to get close to the entrance or raise a hand, it is possible to appropriately determine where there is the person that is performing the getting-on intention gesture, by focusing on the magnitude of the entrance-directional component of the motion vector for each of the blocks.

The vehicle control system according to the first aspect of the present disclosure may further include a correction unit performing correction such that the magnitude of the entrance-directional component of the motion vector for a block of the plurality of blocks is larger as the position of the block of the plurality of blocks on the photographed image is farther from the entrance. The getting-on intention determination unit may determine whether there is the person that is performing the getting-on intention gesture, by performing a predetermined getting-on intention gesture determination process to a group of the block in which the magnitude of the entrance-directional component after the correction is a threshold or more. With this vehicle control system, since a person is viewed so as to be smaller on the photographed image and the gesture of the person is seen so as to be smaller at a position farther from the entrance, it is possible to appropriately determine whether there is the person that is performing the getting-on intention gesture, by performing the correction such that the magnitude of the entrance-directional component of the motion vector for each of the blocks is larger at a position farther from the entrance and performing the predetermined getting-on intention gesture determination process to the group of the block in which the magnitude of the entrance-directional component after the correction is the threshold or more.

A second aspect of the present disclosure is a control method for a vehicle control system that controls opening and closing of a door of a vehicle at an entrance of the vehicle. The control method for the vehicle control system includes: determining whether there is a person that is performing a predetermined getting-on intention gesture to the vehicle, based on time-series data of a photographed image of a vehicle-exterior camera, at a time of execution of a closing control of the door; and stopping the closing control of the door and opening the door, when a determination that there is the person that is performing the getting-on intention gesture is made. The vehicle-exterior camera is configured to photograph a getting-on area at the vicinity of the entrance.

With the control method for the vehicle control system according to the second aspect of the present disclosure, when the determination that there is the person that is performing the predetermined getting-on intention gesture to the vehicle is made, the closing control of the door is stopped, and the door is opened. Therefore, it is possible to accurately determine the getting-on intention compared to the case of focusing on only the position of the person, and to open the door during the closing control.

With the aspects of the present disclosure, it is possible to accurately determine the getting-on intention of the person at the vicinity of the entrance, and to open the door during the closing control.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a vehicle control system according to an embodiment;
FIG. 2 is a perspective view showing an example of a bus that is equipped with the vehicle control system;
FIG. 3A is a diagram showing an example of an image frame that is segmented into a plurality of blocks;
FIG. 3B is a diagram for describing the decision of a movement body that goes toward an entrance of the bus on the image frame;
FIG. 4 is an enlarged view for describing the extraction of a moving body block on the image frame;
FIG. 5A is a diagram for describing a lower edge of a group of moving body blocks that constitute a movement body;
FIG. 5B is a diagram for describing a grid number;
FIG. 6A is a diagram for describing an example of a block line number on the image frame;
FIG. 6B is an example of a correction table depending on the block line number and a ground-contact position;
FIG. 7 is a diagram for describing an example of the distance from the entrance to an object region;
FIG. 8A is a graph showing an example of the change in the strength of a super-resolution process depending on the distance from the entrance to the object region;
FIG. 8B is a graph showing an example of the change in the strength of noise removal depending on the distance from the entrance to the object region;
FIG. 9A is a graph showing an example of the change in a person detection threshold depending on the distance from the entrance to an object group;
FIG. 9B is a graph showing an example of the change in a gesture discrimination threshold depending on the distance from the entrance to the object group; and
FIG. 10 is a flowchart showing an example of a control method for the vehicle control system.

### DETAILED DESCRIPTION OF EMBODIMENTS

Embodiments of the present disclosure will be described below with reference to the drawings.

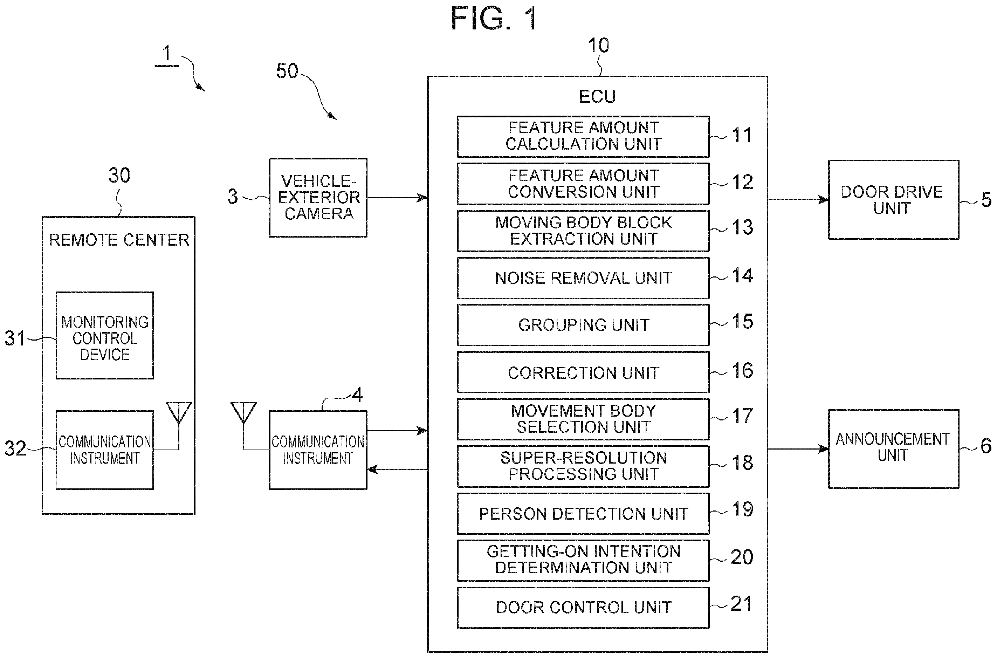

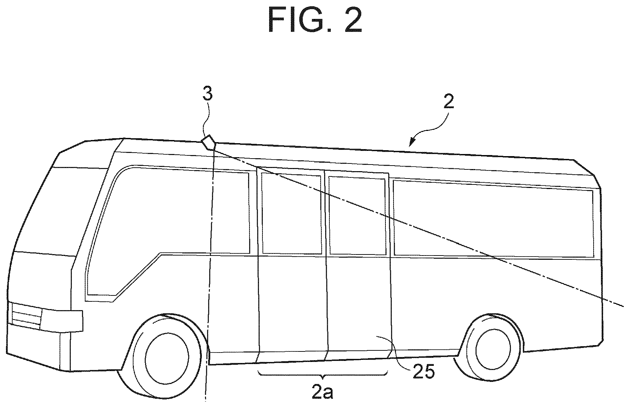

FIG. 1 is a block diagram showing a vehicle control system 1 according to an embodiment. In FIG. 1, the vehicle control system 1 in the embodiment includes a vehicle-exterior camera 3 mounted on a bus 2 (see FIG. 2) that is a vehicle for transporting passengers, a communication instrument 4, a door drive unit 5, an announcement unit 6, an electronic control unit (ECU) 10, and a monitoring control device 31 and communication instrument 32 of a remote center 30. The vehicle is not limited to the bus 2, and only needs to be a vehicle that includes an entrance. The vehicle may an autonomous vehicle.

As shown in FIG. 2, an entrance 2a (doorway) through which passengers get on or off the bus 2 is disposed at a central portion on the left side of the bus 2. The bus 2 includes a door 25 that opens and closes the entrance 2a. The vehicle-exterior camera 3 is provided so as to photograph a getting-on area at the vicinity of the entrance 2a.

The vehicle-exterior camera 3 is disposed on the left side of a roof of the bus 2. The vehicle-exterior camera 3 is a camera that photographs the getting-on area including the entrance 2a in the exterior of the bus 2 and thereby detects a physical body existing at the getting-on area. As the vehicle-exterior camera 3, for example, a bird-view camera having an RGB function is used. The vehicle-exterior camera 3 is not particularly limited, as long as the vehicle-exterior camera 3 is a camera that can be used for physical body detection. The getting-on area is an area where the physical body detection is performed by the vehicle-exterior camera 3. The getting-on area is a region for detecting a person having a getting-on intention. The getting-on area may include the entrance 2a of the bus 2, or may exclude the entrance 2a. The getting-on area may coincide with a photographing region of the vehicle-exterior camera 3. The position of the vehicle-exterior camera 3 is not particularly limited, as long as the position of the vehicle-exterior camera 3 is a position that allows the getting-on area to be photographed.

The communication instrument 4 communicates with the remote center 30 about information relevant to the monitoring and control of the bus 2, by wireless communication.

As described above, the remote center 30 includes the monitoring control device 31 and the communication instrument 32. The monitoring control device 31 monitors the situation of the bus 2, and performs the traveling assist of the bus 2, and the like. The communication instrument 32 wirelessly communicates with the communication instrument 4 of the bus 2.

The door drive unit 5 is a drive unit that performs an opening-closing action of the door 25. The announcement unit 6 informs passengers in the interior and the exterior about information relevant to the situation of the bus 2, and the like, by audio guidance.

The ECU 10 is an electronic control unit that includes a central processing unit (CPU) and a storage unit. For example, the storage unit is constituted by a read only memory (ROM), a random access memory (RAM), an electrically erasable programmable read-only memory (EEPROM), and the like. The ECU 10 realizes various functions by causing the CPU to execute programs stored in the storage unit, for example. The ECU 10 may be constituted by a plurality of electronic units.

The ECU 10 includes a feature amount calculation unit 11, a feature amount conversion unit 12, a moving body block extraction unit 13, a noise removal unit 14, a grouping unit 15, a correction unit 16, a movement body selection unit 17, a super-resolution processing unit 18, a person detection unit 19, a getting-on intention determination unit 20, and a door control unit 21.

The feature amount calculation unit 11 generates an image frame F in which a photographed image of the vehicle-exterior camera 3 is segmented into a plurality of blocks B, and calculates a feature amount indicating a motion direction and a motion amount, for each block B. The feature amount calculation unit 11 calculates a motion vector V as the feature amount for each block B, from time-series data of the photographed image. The motion vector V has a magnitude and a direction. The time-series data of the photographed image is data in which photographed images are arrayed in a time-series order.

The calculation method for the motion vector V is not particularly limited. For the calculation for the motion vector V, block matching may be used, or a Lucas-Kanade method or Horn-Schunck method in which an optical flow is utilized may be used. For the calculation of the motion vector V, a machine learning model for which learning has been performed such that the motion vector V for each block B is output while the time-series data of the photographed image is used as an input.

The machine learning model is a neural network such as a convolutional neural network, for example. The neural network can include a plurality of convolutional layers and a plurality of layers including a pooling layer. As the neural network, a deep learning network by deep learning is used. For the machine learning model, a recurrent neural network may be used. The above-described contents can be employed for various machine learning models described hereinafter.

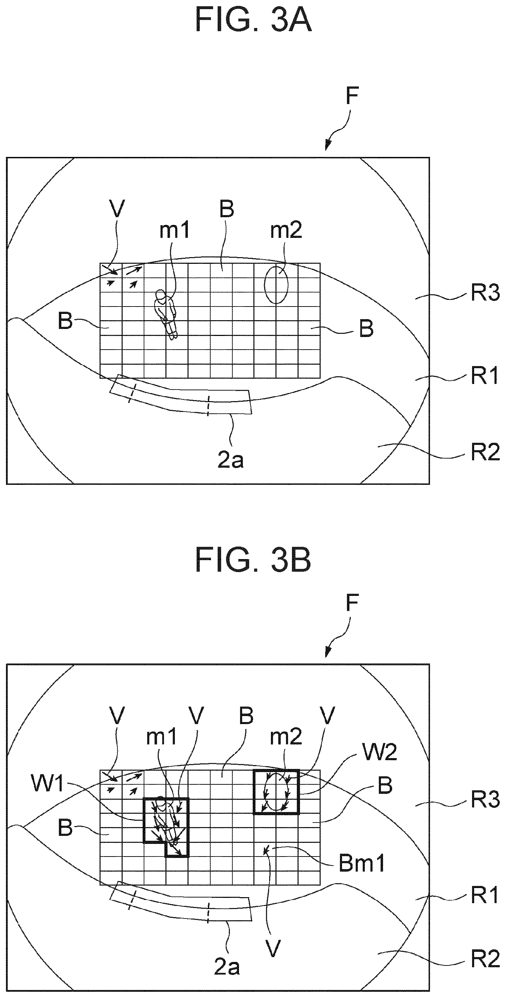

FIG. 3A is a diagram showing an example of the image frame F segmented into the blocks B. In FIG. 3A, the image frame F, the blocks B, a ground region R1, a bus roof region R2, an air region R3, the entrance 2a, a physical body m1, a physical body m2, and the motion vector V are shown.

The blocks B are mainly set at the ground region R1 that is positioned on the outside of the entrance 2a of the bus 2 on the photographed image. The ground region R1 is viewed between the bus roof region R2 and the air region R3 on the photographed image. At each block B, the motion direction and the motion amount are expressed by the direction and magnitude of the motion vector V. On the image frame F shown in FIG. 3A, the direction and magnitude of the motion vector V are shown at only four blocks B (see an upper left corner portion in the figure), but the direction and magnitude of the motion vector V are expressed at all blocks B. The physical body m1 and the physical body m2 are physical bodies that are detected from the photographed image of the vehicle-exterior camera 3.

The feature amount conversion unit 12 calculates the magnitude of an entrance-directional component of the motion vector V calculated by the feature amount calculation unit 11. FIG. 3B is a diagram for describing the decision of a movement body that goes toward the entrance of the bus on the image frame. The magnitude of the entrance-directional component of the motion vector V is the magnitude of a projected vector when the motion vector V is projected on a straight line that extends from each block B toward the entrance 2a. As the straight line that extends from each block B toward the entrance 2a, for example, a straight line that joins the center point of the block B and an arbitrary point (for example, the center of a door aperture when the entrance 2a is opened) on the entrance 2a can be adopted. For the entrance direction, a certain error is allowed. The calculation method for the magnitude of the entrance-directional component of the motion vector V is not particularly limited. The magnitude of the entrance-directional component of the motion vector V may be directly output from the machine learning model while the time-series data of the photographed image is used as an input. The feature amount conversion unit 12 converts the magnitude of the entrance-direction component of the motion vector V, into a scalar value.

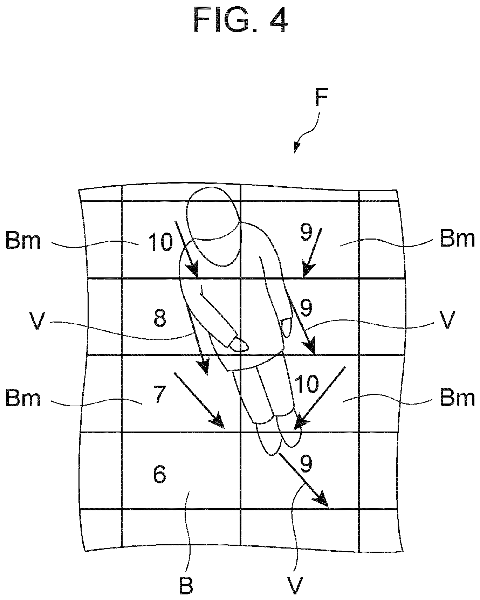

Based on the scalar value converted for each block B by the feature amount conversion unit 12, the moving body block extraction unit 13 extracts a block B in which a prescribed amount or more of motion is performed toward the entrance 2a of the bus 2, as a moving body block Bm. FIG. 4 is an enlarged view for describing the extraction of the moving body block on the image frame. The moving body block extraction unit 13 extracts a block B in which the scalar value is a predetermined threshold or more, as the moving body block Bm (see FIG. 3B and FIG. 4).

The noise removal unit 14 removes, as noise, an isolated moving body block Bm from moving body blocks Bm extracted by the moving body block extraction unit 13.

The grouping unit 15 performs the grouping of adjacent moving body blocks Bm including an identical movement body, from moving body blocks Bm extracted by the moving body block extraction unit 13 and not removed by the noise removal unit 14, and thereby, decides a movement body that moves toward the entrance 2a of the bus 2 (see FIG. 3B). The grouping unit 15 decides the movement body that goes toward the entrance 2a of the bus 2, by the grouping of adjacent moving body blocks Bm of the moving body blocks Bm.

On the image frame F shown in FIG. 3B, two movement bodies m1, m2 that go toward the entrance 2a of the bus 2 are decided. The movement bodies m1, m2 are respectively included in movement body detection boxes W1, W2 each of which is constituted by a plurality of moving body blocks Bm. As a method for setting the movement body detection boxes W1, W2 on the image frame F, a well-known technique can be employed.

The correction unit 16 corrects the scalar value for increasing the accuracy of the selection of the movement body. First, the correction unit 16 decides a ground-contact position of the movement body. The correction unit 16 decides the ground-contact position by identifying a moving body block Bm at a lowest edge on the photographed image in units of the group of moving body blocks Bm and determining a grid number to which the lower edge of the identified moving block Bm belongs.

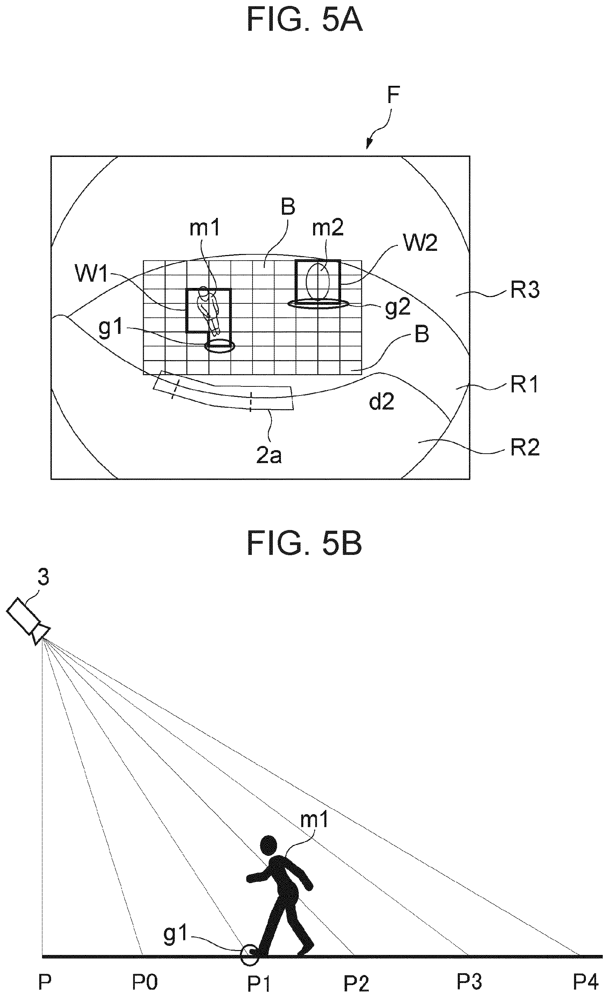

FIG. 5A is a diagram for describing the lower edge of the group of moving body blocks that constitute the moving body. In FIG. 5A, a lower edge g1 of the group of moving body blocks Bm corresponding to the movement body m1 (movement body detection box W1) and a lower edge g2 of the group of moving body blocks Bm corresponding to the movement body m2 (movement body detection box W2) are shown.

FIG. 5B is a diagram for describing a grip number. In FIG. 5B, grid numbers P0 to P4 on the image frame F and the lower edge g1 of the movement body m1 are shown. As shown in FIG. 5A and FIG. 5B, the correction unit 16 identifies the lower edge g1 of the group of the moving body blocks Bm corresponding to the movement body m1, from the photographed image, and decides the grid number P1 to which the lower edge g1 belongs, as the ground-contact position P1 of the movement body m1.

The correction unit 16 corrects the scalar value (the magnitude of the entrance-directional component of the motion vector V) for each moving body block Bm in units of the group. For example, the correction unit 16 corrects the scalar value for each moving body block Bm constituting the movement body m1, using a predetermined correction table, based on the ground-contact position P1 of the movement body m1 and the position for each moving body block Bm constituting the movement body m1.

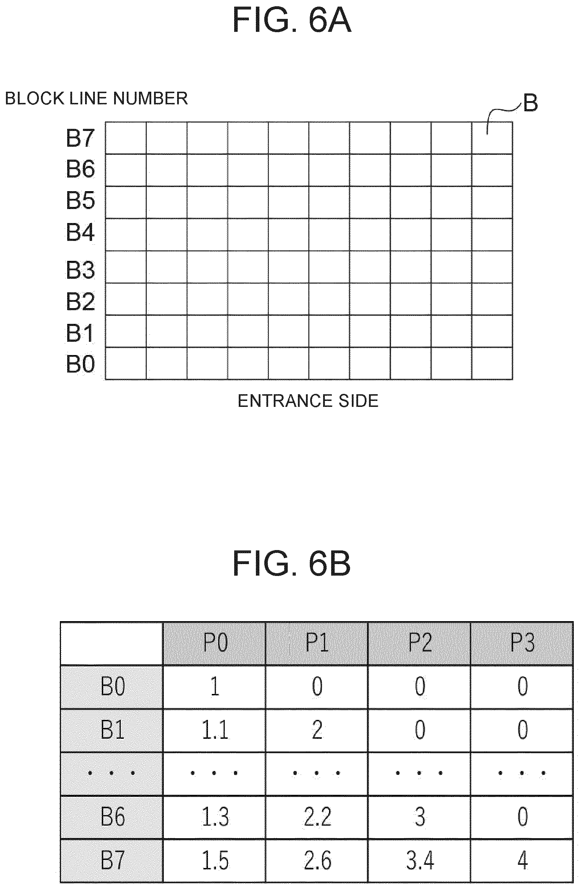

FIG. 6A is a diagram for describing an example of a block line number on the image frame F. In FIG. 6A, block line numbers are set as B0 to B7 from the line closest to the entrance 2a. The correction unit 16 identifies the block line number shown in FIG. 6A, as the position of each moving body block Bm constituting the movement body m1.

FIG. 6B is an example of the correction table depending on the block line number and the ground-contact position. The correction table shown in FIG. 6B is set such that a correction coefficient is larger as the position of the block B is farther from the entrance. In the correction table, a different correction coefficient may be set depending on the position of each block B, instead of the block line number. Also in this case, the correction coefficient is set so as to be larger as the position of the block B is farther from the entrance. The correction unit 16 performs the correction by multiplying the scalar value for each moving body block Bm by the correction coefficient that is obtained from the correction table shown in FIG. 6B based on the ground-contact position P1 (grid number) of the movement body m1 and the position for each moving body block Bm constituting the movement body m1.

The movement body selection unit 17 performs the selection of the movement body that is an object of a later-described super-resolution process. First, the movement body selection unit 17 evaluates the average value of the scalar values in units of the group. For example, the movement body selection unit 17 evaluates the average value by dividing the total of the scalar values of the moving body blocks Bm constituting the movement body m1 by the number of the moving body blocks Bm constituting the movement body m1.

The movement body selection unit 17 does not always need to evaluate the average value. It is only necessary to be an evaluation value that makes it possible to appropriately determine that the movement body m1 is going toward the entrance 2a. The movement body selection unit 17 may evaluate the median value instead of the average value. The movement body selection unit 17 may employ a value that is obtained from a predetermined arithmetic equation using the scalar values of the moving body blocks Bm constituting the movement body m1 as inputs.

The movement body selection unit 17 selects a movement body (a group of moving body blocks Bm) in which the evaluated average value (evaluation value) is a threshold or more. The number of movement bodies that are selected is not limited to one, and a plurality of movement bodies may be selected. Here, it assumed that the movement bodies m1, m2 are selected.

The super-resolution processing unit 18 executes the super-resolution process to the movement body selected by the movement body selection unit 17. The super-resolution process is an image process for increasing the accuracies of later-described person detection and getting-on intention gesture discrimination. The super-resolution processing unit 18 performs cropping and resizing with a rectangular box that circumscribes the movement body, and decides the object region of the super-resolution process. The decision method for the object region is not limited to the above content. The super-resolution processing unit 18 performs the super-resolution process including at least one of noise removal, lens distortion correction, and scale-up, to the object region.

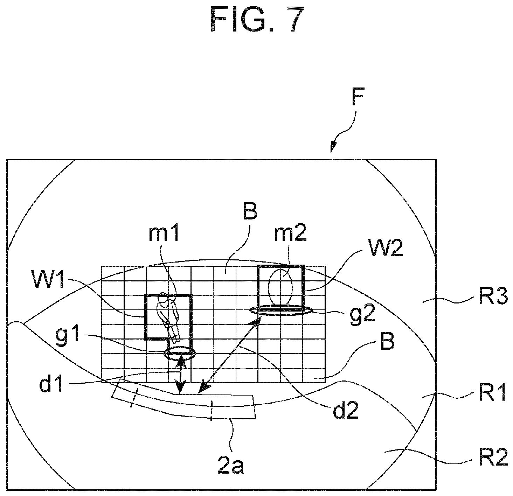

The super-resolution processing unit 18 alters the strength of the super-resolution process and the strength of the noise removal, depending on the distance from the entrance 2a to the object region on the image frame F. FIG. 7 is a diagram for describing an example of the distance from the entrance 2a to the object region. In FIG. 7, the object region of the movement body m2 is the same as the inside region of the movement body detection box W2. The object region of the movement body m1 is a rectangular region that roughly overlaps with the movement body detection box W1. In FIG. 7, the object region is not illustrated. In FIG. 7, a distance d1 from the entrance 2a to the object region of the movement body m1 and a distance d2 from the entrance 2a to the object region of the movement body m2 are shown.

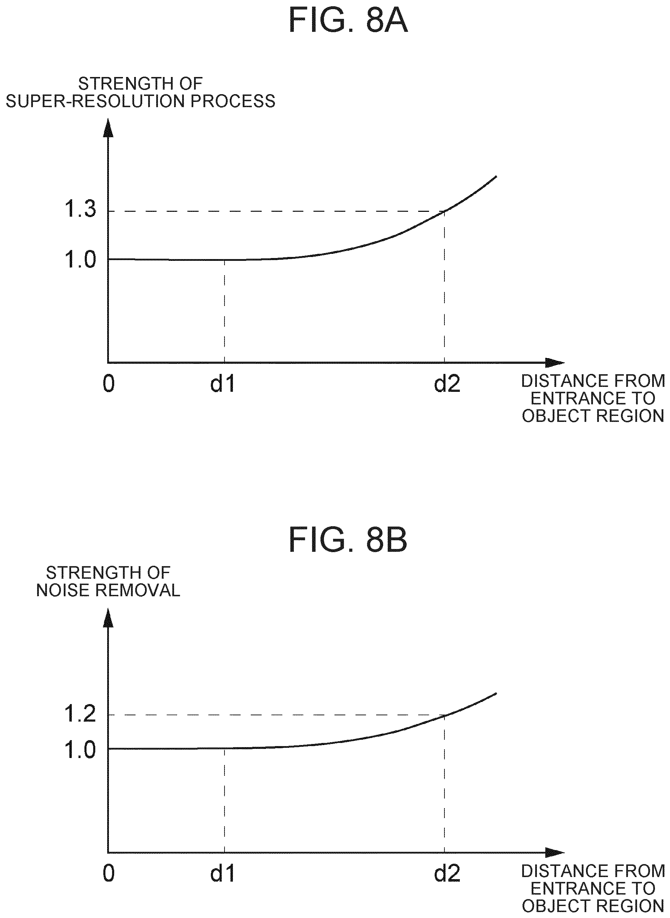

FIG. 8A is a graph showing an example of the change in the strength of the super-resolution process depending on the distance from the entrance 2a to the object region. The ordinate axis indicates the strength of the super-resolution process. The abscissa axis indicates the distance from the entrance 2a to the object region. As shown in FIG. 8A, the super-resolution processing unit 18 increases the strength of the super-resolution process as the distance from the entrance 2a to the object region is larger. For example, when the strength of the super-resolution process for the movement body m1 is 1.0, the super-resolution processing unit 18 executes the super-resolution process while the strength of the super resolution process for the movement body m2 is 1.3, because of the distance d1 < the distance d2.

FIG. 8B is a graph showing an example of the change in the strength of the noise removal depending on the distance from the entrance 2a to the object region. The ordinate axis indicates the strength of the noise removal. The abscissa axis indicates the distance from the entrance 2a to the object region. As shown in FIG. 8B, the super-resolution processing unit 18 increases the strength of the noise removal as the distance from the entrance 2a to the object region is larger. For example, when the strength of the noise removal for the movement body m1 is 1.0, the super-resolution processing unit 18 executes the noise removal while the strength of the noise removal for the movement body m2 is 1.2, because of the distance d1 < the distance d2. The strength of the super-resolution process and the strength of the noise removal do not always need to be changed depending on the distance from the entrance 2a to the object region. The strength of the super-resolution process and the strength of the noise removal may be fixed.

The person detection unit 19 performs the person detection to the movement bodies m1, m2 after the super-resolution process by the super-resolution processing unit 18. The person detection unit 19 may perform the person detection using a machine learning model. As the person detection with use of the machine learning model, a technique such as Haar cascade can be employed. The person detection unit 19 may perform the person detection by a well-known technique such as pattern matching.

As the person detection, for example, the person detection unit 19 may calculate the reliability of the detection indicating that the movement body is a person. The machine learning model may be configured to output the reliability of the person detection, instead of the determination result about the person detection. The person detection unit 19 may be configured to detect that the movement body is a person, when the reliability is a person detection threshold or more. The person detection unit 19 may alter the person detection threshold depending on the distance from the entrance 2a to an object group on the image frame F. The object group is the group of the moving body blocks Bm constituting the movement body that is an object of the person detection.

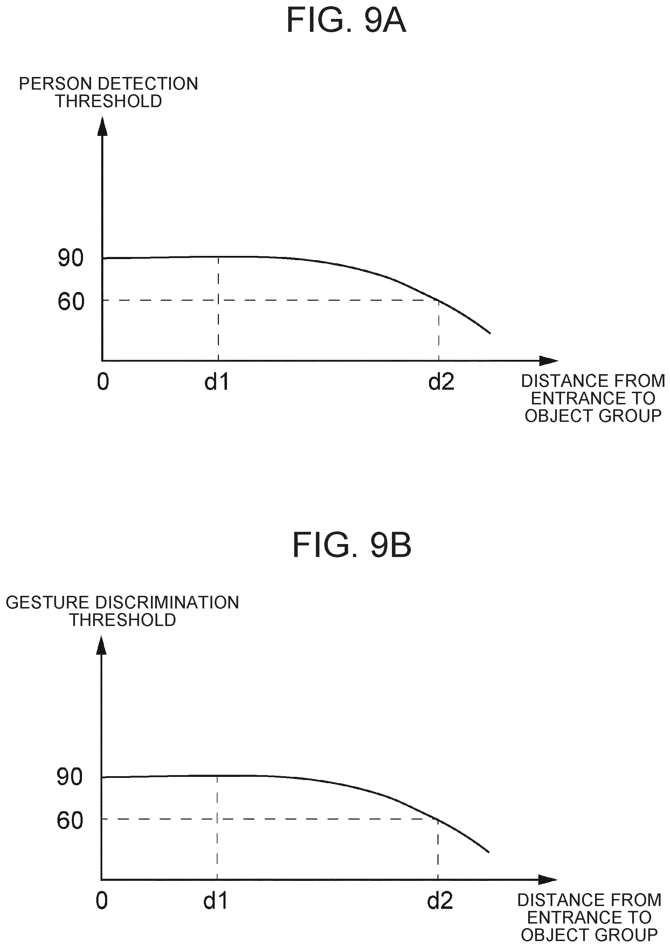

FIG. 9A is a graph showing an example of the change in the person detection threshold depending on the distance from the entrance 2a to the object group. The ordinate axis indicates the person detection threshold. The abscissa axis indicates the distance from the entrance 2a to the object group. Here, the distance d1 from the entrance 2a to the object region of the movement body m1 is treated as the distance from the entrance 2a to the object group (the group of the moving body blocks Bm constituting the movement body m1) of the movement body m1. The same goes for the distance d2 to the movement body m2.

As shown in FIG. 9A, the person detection unit 19 decreases the person detection threshold as the distance from the entrance 2a to the object group is larger. When the person detection threshold for the movement body m1 is 90, the person detection unit 19 executes the determination about the person detection while the person detection threshold for the movement body m2 is 60, because of the distance d1 < the distance d2. The person detection unit 19 does not need to detect a person that rides on a bicycle or the like, as a person. The person detection unit 19 may detect a person in a wheelchair, as a person.

In the case where the person detection unit 19 detects that the movement body is a person, the getting-on intention determination unit 20 determines whether there is a person that is performing a getting-on intention gesture to the bus 2.

The getting-on intention gesture is a motion that is previously determined as a gesture that indicates an intention to get on the bus 2. For example, the getting-on intention gesture may be a motion in which the person raises a hand while getting close to the bus 2. The getting-on intention gesture may be a motion in which the person waves a hand while getting close to the bus 2. In the case where a motion in which the person opens the mouth and conveys the getting-on intention is performed in addition to the motion of the hand, the getting-on intention determination unit 20 may make the determination of the getting-on intention gesture. The getting-on intention determination unit 20 may determine a motion in which the person is running toward the entrance 2a, as the getting-on intention gesture.

For example, the getting-on intention determination unit 20 determines whether there is the person that is performing the getting-on intention gesture, from the time-series data of the photographed image, using a machine learning model. For which the machine learning model, learning has been performed such that a determination result about whether there is the person that is performing the getting-on intention gesture is output while the time-series data of the photographed image is used as an input. The motion vector V for each moving body block Bm constituting the movement body m1 determined as a person may be added as an input. Further, an output result of another machine learning model (the machine learning model for the person detection, or the like) may be used as an input.

The getting-on intention determination unit 20 may determine whether there is the person that is performing the getting-on intention gesture, without using the machine learning model. The getting-on intention determination unit 20 may discriminate the getting-on intention gesture using at least one of pattern matching, silhouette analysis, optical flow analysis, histogram-of-gradient analysis (HOG) analysis, and the like. The getting-on intention determination unit 20 can employ a well-known gesture discrimination technique.

The getting-on intention determination unit 20 may calculate the reliability of the discrimination indicating that there is the person that is performing the getting-on intention gesture. The machine learning model may be configured to output the reliability of the getting-on intention gesture, instead of the determination result about the getting-on intention gesture. The getting-on intention determination unit 20 may be configured to determine that the person is performing the getting-on intention gesture, when the reliability is a gesture discrimination threshold or more. The getting-on intention determination unit 20 may alter the gesture discrimination threshold depending on the distance from the entrance 2a to the object group on the image frame F.

FIG. 9B is a graph showing an example of the change in the strength of the gesture discrimination threshold depending on the distance from the entrance to the object group. The ordinate axis indicates the gesture discrimination threshold. The abscissa axis indicates the distance from the entrance 2a to the object group. As shown in FIG. 9B, the getting-on intention determination unit 20 decreases the gesture discrimination threshold as the distance from the entrance 2a to the object group is larger. When the gesture discrimination threshold for the movement body m1 is 90, the getting-on intention determination unit 20 executes the gesture discrimination while the gesture discrimination threshold for the movement body m2 is 60, because of the distance d1 < the distance d2.

The door control unit 21 controls the opening and closing of the door 25 at the entrance 2a of the bus 2. When a driver performs an operation for door opening or door closing, the door control unit 21 executes a door opening control or a door closing control by sending a control signal to the door drive unit 5.

In the case where the getting-on intention determination unit 20 determines that there is the person that is performing the getting-on intention gesture to the bus 2 at the time of the execution of the door closing control, the door control unit 21 stops the door closing control and opens the door 25. In this case, the door control unit 21 may announce that the door closing control is stopped because of the detection of the person having the getting-on intention, within the vehicle and at the vicinity of the entrance, through the announcement unit 6.

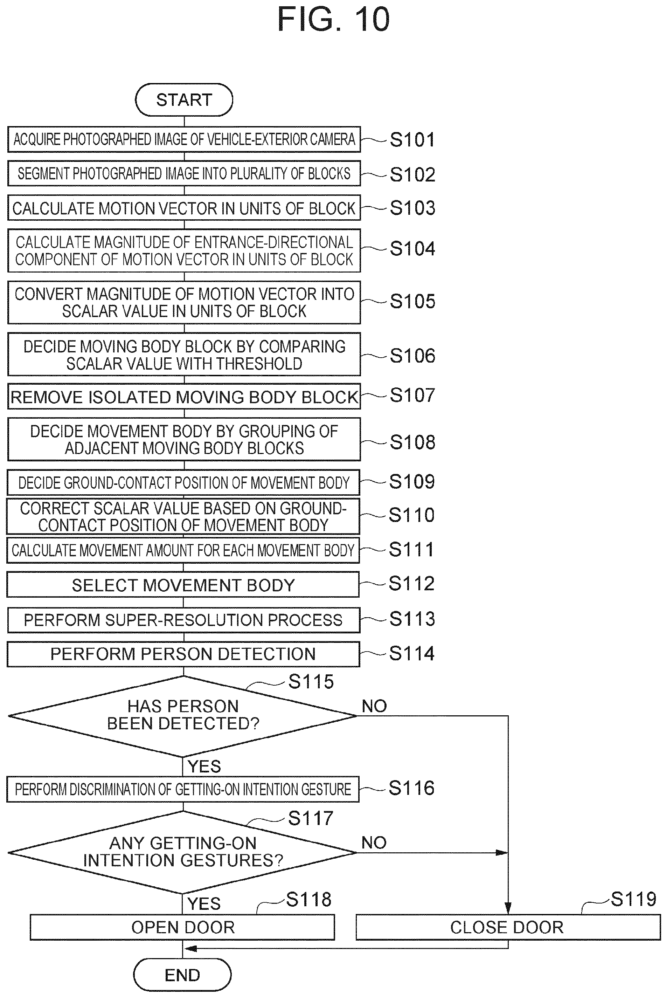

Next, a control method for the vehicle control system according to the embodiment will be described with reference to the drawings. FIG. 10 is a flowchart showing an example of the control method for the vehicle control system. The flowchart shown in FIG. 10 is an example of a process that is started when the closing control for the door 25 of the bus 2 is executed.

In FIG. 10, first, the ECU 10 acquires the photographed image of the vehicle-exterior camera 3 (procedure S101). The photographed image is acquired as time-series data. As shown in FIG. 3A, the ECU 10 generates the image frame F in which the photographed image of the vehicle-exterior camera 3 is segmented into the blocks B (procedure S102). Procedure is synonymous with step.

Subsequently, as shown in FIG. 3A, the ECU 10 calculates the motion vector V on the image frame F in units of the block B (procedure S103). Specifically, the ECU 10 calculates the motion vector V of each block B, based on the image frame F obtained at a current time t and the image frame F obtained at a last time t-1.

Subsequently, the ECU 10 calculates the magnitude of the entrance-directional component of the motion vector V in units of the block B (procedure S104). On the image frame F shown in FIG. 3A, the motion vectors V of the four blocks B at the upper left corner portion do not extend toward the entrance 2a of the bus 2, and therefore, the extraction is not performed. Subsequently, as shown in FIG. 4, the ECU 10 converts the magnitude of the motion vector V extending toward the entrance 2a of the bus 2, into a scalar value, in units of the block B (procedure S105).

Subsequently, the ECU 10 decides the moving body block Bm by comparing the scalar value with the predetermined threshold in units of the block B (procedure S106). On the image frame F shown in FIG. 4, as an example, the threshold is 7, and a block B in which the scalar value is 7 or more is adopted as the moving body block Bm. In each moving body block Bm, a part of the movement body is included.

Subsequently, the ECU 10 removes an isolated moving body block Bm as noise (procedure S107). On the image frame F shown in FIG. 3B, an independent moving body block Bm1 has the motion vector V extending toward the entrance 2a of the bus 2, but is not adjacent to anther moving body block Bm, and therefore, the isolated moving body block Bm is removed as noise.

Subsequently, the ECU 10 performs the grouping of adjacent moving body blocks Bm including an identical movement body, and thereby, decides a movement body that goes toward the entrance 2a of the bus 2 (procedure S108). On the image frame F shown in FIG. 3B, the two movement bodies m1, m2 that go toward the entrance 2a of the bus 2 are decided. The movement bodies m1, m2 are respectively included in the movement body detection boxes W1, W2 each of which is constituted by a plurality of moving body blocks Bm.

Subsequently, the ECU 10 decides the ground-contact position of the movement body (procedure S109). The ECU 10 decides the ground-contact position by identifying a moving body block Bm at the lowest edge on the photographed image in units of the group of moving body blocks Bm and determining the grid number to which the lower edge of the identified moving body block Bm belongs (see FIG. 6A).

The ECU 10 corrects the scalar value based on the ground-contact position of the movement body (procedure S110). The ECU 10 corrects the scalar value of each moving body block Bm constituting the movement body, using the predetermined correction table (see FIG. 6B), based on the ground-contact position of the movement body and the position for each moving body block Bm constituting the movement body. The ECU 10 performs the correction by multiplying the scalar value for each moving body block Bm by the correction coefficient that is obtained from the correction table.

The ECU 10 calculates the movement amount for each movement body (procedure S111). As the movement amount for each movement body, the ECU 10 evaluates the average value of the scalar values in units of the group of the moving body blocks Bm constituting the movement body.

The ECU 10 performs the selection of the movement body that is an object of the super-resolution process (procedure S112). The movement body selection unit 17 selects a movement body in which the average value evaluated in S111 is the threshold or more, as the object of the super-resolution process.

The ECU 10 executes the super-resolution process to the selected movement body (procedure S113). The ECU 10 performs cropping and resizing with a rectangular box that circumscribes the movement body, and decides the object region of the super-resolution process. The ECU 10 performs the super-resolution process including at least one of the noise removal, the lens distortion correction, and the scale-up, to the object region.

The ECU 10 performs the person detection to the movement body after the super-resolution process (procedure S114). As the person detection, for example, the ECU 10 calculates the reliability of the detection indicating that the movement body is a person. The ECU 10 detects that the movement body is a person, when the reliability is the person detection threshold or more (see FIG. 9A). The ECU 10 determines whether a person has been detected (procedure S115).

The ECU 10 performs the discrimination of the getting-on intention gesture (procedure S116). For example, the ECU 10 determines whether there is a person that is performing the getting-on intention gesture, from the time-series data of the photographed image, using the machine learning model. The ECU 10 may calculate the reliability of the discrimination indicating that there is the person that is performing the getting-on intention gesture. The ECU 10 determines that the person is performing the getting-on intention gesture, when the reliability is the gesture discrimination threshold or more (see FIG. 9B). The ECU 10 determines whether there is the person that is performing the getting-on intention gesture (procedure S117).

In the case where it is determined that there is the person that is performing the getting-on intention gesture in procedure S117, the ECU 10 stops the door closing control, and opens the door 25 (procedure S118). The ECU 10 performs the door opening control by sending the control signal to the door drive unit 5. The ECU 10 may announce that the door closing control is stopped and the door 25 is opened, through the announcement unit 6.

In the case where no person has been detected in procedure S114 or in the case where it is not determined that there is the person that is performing the getting-on intention gesture in procedure S117, the ECU 10 continues the door closing control, and closes the door 25 (procedure S119).

With the vehicle control system 1 and the control method for the vehicle control system 1 according to the embodiment described above, when it is determined that there is the person that is performing the predetermined getting-on intention gesture to the bus 2, the closing control of the door 25 is stopped, and the door 25 is opened. Therefore, it is possible to accurately determine the getting-on intention of the person at the vicinity of the entrance 2a, compared to the case of focusing on only the position of the person, and to open the door 25 during the closing control.

Further, with the vehicle control system 1, it is possible to appropriately determine whether there is the person that is performing the getting-on intention gesture, using the machine learning model. Furthermore, with the vehicle control system 1, since the person having the getting-on intention is likely to get close to the entrance or raise a hand, it is possible to appropriately determine whether there is the person that is performing the getting-on intention gesture, by focusing on the magnitude of the entrance-directional component of the motion vector V for each block B.

Further, with the vehicle control system 1, since a person is viewed so as to be smaller on the photographed image and the gesture of the person is seen so as to be smaller at a position farther from the entrance 2a, it is possible to appropriately determine whether there is the person that is performing the getting-on gesture, by performing the correction such that the magnitude (scalar value) of the entrance-directional component of the motion vector V for each block B is larger at a position farther from the entrance 2a and performing the getting-on intention gesture determination process to the group of moving body blocks Bm in which the scalar value after the correction is the threshold or more.

The embodiment of the present disclosure has been described above. The present disclosure is not limited to the above-described embodiment. In addition to the above-described embodiment, the present disclosure can be carried out in various modes in which various alterations and modification are performed based on the knowledge of a person skilled in the art.

For example, the vehicle control system 1 may directly perform the person detection from the time-series data of the photographed image, using a machine learning model. The vehicle control system 1 may directly determine whether there is the person that is performing the getting-on intention gesture, from the time-series data of the photographed image, using a machine learning model.

The vehicle control system 1 does not always need to correct the scalar value. The vehicle control system 1 may select the movement body using the scalar value, without performing the correction. In this case, the vehicle control system 1 does not need to decide the ground-contact position of the movement body. In the case where the vehicle control system 1 performs the correction, the correction table is not limited to the correction table shown in FIG. 6B. The correction table only needs to be set such that the correction coefficient is larger at a position farther from the entrance 2a. Further, the super-resolution process is not essential.

## Claims

1. A vehicle control system (1) that controls opening and closing of a door (25) of a vehicle (2) at an entrance (2a) of the vehicle (2), the vehicle control system (1) comprising:
a vehicle-exterior camera (3) configured to photograph a getting-on area at a vicinity of the entrance (2a);
a getting-on intention determination unit (20) determining whether there is a person that is performing a predetermined getting-on intention gesture to the vehicle (2), based on time-series data of a photographed image of the vehicle-exterior camera (3), at a time of execution of a closing control of the door (25); and
a door control unit (21) stopping the closing control of the door (25) and open the door (25), when the getting-on intention determination unit (20) determines that there is the person that is performing the getting-on intention gesture.

2. The vehicle control system (1) according to claim 1, wherein:
the getting-on intention determination unit (20) determines, by using a machine learning model, whether there is the person that is performing the getting-on intention gesture; and
the machine learning model is a machine learning model that outputs a determination result about whether there is the person that is performing the getting-on intention gesture, using the time-series data of the photographed image as an input.

3. The vehicle control system (1) according to claim 1, further comprising a feature amount calculation unit (11) segmenting the photographed image into a plurality of blocks and calculate a motion vector for each of the plurality of blocks based on the time-series data of the photographed image, wherein:
the feature amount calculation unit (11) calculates a magnitude of an entrance-directional component of the motion vector for each of the plurality of blocks; and
the getting-on intention determination unit (20) determines, by using the magnitude of the entrance-directional component of the motion vector for each of the plurality of blocks, whether there is the person that is performing the getting-on intention gesture.

4. The vehicle control system (1) according to claim 3, further comprising a correction unit (16) performing correction such that the magnitude of the entrance-directional component of the motion vector for a block of the plurality of blocks is larger as a position of the block of the plurality of blocks on the photographed image is farther from the entrance (2a), wherein the getting-on intention determination unit (20) determines whether there is the person that is performing the getting-on intention gesture, by performing a predetermined getting-on intention gesture determination process to a group of the block in which the magnitude of the entrance-directional component after the correction is a threshold or more.

5. A control method for a vehicle control system (1) that controls opening and closing of a door (25) of a vehicle (2) at an entrance (2a) of the vehicle (2), the control method comprising:
determining whether there is a person that is performing a predetermined getting-on intention gesture to the vehicle (2), based on time-series data of a photographed image of a vehicle-exterior camera (3), at a time of execution of a closing control of the door (25), the vehicle-exterior camera (3) configured to photograph a getting-on area at a vicinity of the entrance (2a); and
stopping the closing control of the door (25) and opening the door (25), when a determination that there is the person that is performing the getting-on intention gesture is made.
